# EUROPEAN PATENT SPECIFICATION

(11) **EP 1 467 325 B1**
(45) Date of publication and mention of the grant of the patent: **22.02.2006**
(21) Application number: 04005864.6
(22) Date of filing: 11.03.2004
(51) Int. Cl.: G07D 11/00

(54) **A condition detecting unit of a banknote storing unit**
Zustandserkennungseinheit einer Banknotenspeichereinheit
Dispositif pour détecter une condition dans un reservoir de billets

(30) Priority: 11.03.2003 JP 2003065684
(43) Date of publication of application: 13.10.2004
(73) Proprietor: ASAHI SEIKO KABUSHIKI KAISHA, Tokyo 107-0062 (JP)
(72) Inventor: Takeuchi, Toru, Iwatsuki-shi Saitama-ken (JP)
(74) Representative: Hofer, Dorothea

(56) References cited:
- EP-A- 0 762 344
- EP-A- 1 160 738
- WO-A-03/013994
- US-A- 5 101 979
- US-A- 5 653 436
- US-A- 5 756 985
- US-A1- 2001 011 659
- US-B1- 6 435 329

## Description

This invention is related to a condition detecting unit of a banknote storing unit which is detachable to the banknote receiving unit and pushes the received banknote which is received by a banknote receiving unit into the storing section, and stores the banknotes.
More specially, this invention is related to a condition detecting unit of a banknote storing unit which can detect that the full amount of the stored banknotes in the storing section, the position of the moving unit which is located at the standby position or the pushed position or the position of the banknote in the banknote storing unit.

A prior art of this condition storing unit of the banknote storing unit which receives banknotes through the banknote receiving unit is known; for example, Japanese Utility Model 2558985 (corresponding to U.S. Patent 5836435).
In the prior art, a banknote storing unit is detachable to the banknote receiving unit and includes a movable lever which moves working together to the amount of the stored banknotes, and a reflecting board.

The banknote storing unit has a projecting and receiving section.
The emitting light from the projecting section goes into the banknote storing unit through the window of the banknote storing unit.

Afterwards the light is reflected by a reflecting board, goes through the window, and then goes into the receiving section. Then the situation of the banknote storing unit is detected. Also, the movable lever moves based on the amount of stored banknotes, and when the lever blocks the emitting light, the full situation of the banknotes is detected.

In the prior art, the emitted light from the projecting section goes through atmosphere, afterwards it is received in the receiving section.
The small banknote storing unit is built in a vending machine where is located at outdoors.
If a window is used, dust can go into the banknote storing unit easily.
Therefore, an operator must clean the reflecting board at frequent intervals.
Also, the emitted light diffuses in proportion to distance. Therefore, the distance between the projecting and receiving section and the reflecting board is requested highly accurate.

Document US 2001/0011659 A1 relates to currency handling machines and in particular to a note hopper for dispensing paper currency, banknotes or cash equivalent scrip. The note holding and dispensing device described therein comprises a frame with a cavity formed therein, a cassette removably positioned in the cavity, wherein the cassette has a chamber for receiving the notes and an extracting device for discharging the notes from the chamber. An extraction drive means operates the extracting device in the cassette to fetch the notes from the cassette. A conveyor means is provided for transporting the notes received from the cassette to an outlet. An electronic controller is provided for generating drive signals to operate the extraction drive means. There are further provided mechanically activated sensors and optical sensors in order to detect the position of the banknote and of other members of the note holding and dispensing device.

The first purpose of this present invention is to provide a condition detecting unit which eliminates the effects of the dust.
The second purpose of this invention is to provide a condition detecting unit which can detect at roughly attaching position of the banknote storing unit.
The third purpose of this invention is to provide a detecting unit which is cheaper in comparison with plural detecting units.

The object is attained by a condition detecting unit according to claim 1. Further developments of the invention are specified in the subordinate claims, respectively.

In this structure, the (light) projecting and (light) receiving surface structures a surface of the banknote storing box.
Therefore the distance of the banknote receiving unit side between the projecting surface and the receiving surface can be narrowed.
If the distance is small, it is difficult for the dust to enter.
As a result, the projecting and receiving surface does not receive the effects of the dust.
When the dust adheres on the projecting and receiving surface, an operator wipes only one surface, because the projecting and receiving surface structures a surface of the banknote storing box.
As a result, the maintenance is easier.

Also, the light which is projected from the banknote receiving unit immediately goes into the receiving surface of the optical guide, afterwards it goes into the receiving section of the banknote receiving unit from the projecting surface.

In this structure, the projecting section and the receiving surface, and the projecting surface and the receiving section can be located closely.
Therefore the diffusion of the projected light drastically decreases.
Also, the attenuation of the light is drastically reduced, because the light which passes through in the optical guide is guided by the outer walls of the optical guide.
Therefore the attached position of the banknote storing box to the banknote receiving unit can be located roughly.

Also, the optical guide is fixed at the banknote storing box as it prevents damage during transport.
Therefore, when the banknote storing box is dropped or hit on the way to transport, the trouble of the optical guide does not occur.
Also, the projecting and receiving surface is located on only one of the surfaces.
Therefore the electrical parts of the projecting and receiving section can be located at one side of the banknote receiving unit.
In other words, the electrical parts referring to the condition detecting unit can be located on only one base board. Accordingly, the costs of the device are inexpensive.

This present invention is desirable, because the optical guide includes a detecting projecting surface which faces the detected section in the banknote storing box and a detecting receiving surface which faces the receiving surface.

In this structure, the emitted light from the projecting section of the banknote receiving unit immediately goes into the optical guide, next it passes through the optical guide, next detecting projecting surface, next a suffering detecting section and goes into the detecting receiving surface, next passes through the optical guide, next goes from the projecting surface to the receiving section of the banknote receiving unit.
Therefore the projecting section and the receiving surface, and the projecting surface and the receiving section are located closely to each other.
As a result, the diffusion of the light is drastically reduced.
Also, the light which passes through the optical guide is guided by the outer wall.
Therefore the attenuation of the light is drastically reduced.

Therefore the attached position of the banknote storing box can be located near about.
Also, the condition detecting unit of the banknote storing box is machinery parts; for example the optical guide etc.
Therefore the trouble of the condition detecting unit does not occur as it prevents damage during transport.
Further, the electrical parts of the projecting and receiving section are located at only one surface of the banknote storing box.
In other words, the electrical parts referring to the condition detecting unit are located on one board.
As a result, the costs are drastically reduced.

This present invention is desirable, because the banknote position detecting unit includes a detecting projecting surface and reflector which is located at the side of the banknote moving passageway in the banknote storing box and is located on the opposite side of the banknote moving passageway with regard to the optical guide.
In this structure, the light which is received from the receiving surface is guided by the optical guide, and goes to the detecting projecting surface, then it is projected into the banknote passageway from the detecting projecting surface. The light crosses the banknote passageway, and is reflected by the reflector, next crosses the banknote passageway again, next goes into the detecting receiving surface, next is guided by the optical guide and goes into the projecting surface, afterwards it goes into the receiving section.
Therefore the positions which the light passes through is for example between the projecting section and the receiving surface, between the detecting projecting surface and the reflector, between the reflector and the detecting receiving surface and between the projecting surface and the receiving section. Accordingly, the distances are very short, and the diffusion of the light is reduced, and the attenuation of the light is reduced drastically.
As a result, the banknote detecting is accurate.

This present invention is desirable, because a standby position detecting unit is structured by a detecting projecting surface and a detecting receiving surface which are both of the optical guide which face the standby position of the moving unit in the storing box.
In this structure, the moving unit is located in the banknote storing box which is movable.
The projecting section and the receiving section which detect the standby position of the moving unit are located in the banknote receiving unit.
Also, the projected light from the projecting section is guided by the optical guide which is attached at the banknote storing box.

Therefore the electrical parts, for example the photo-electrical sensor, is not needed at the banknote storing box. As a result, the trouble with the electrical parts is reduced. Also, the distance between the projecting section and the receiving section, in other words, the distance which the light passes through in the air is short.
Therefore the diffusion of the light is reduced, as a result, it is more accurate.

This present invention is desirable, because the pushing position detecting unit is structured by a detecting projecting surface and a detecting receiving surface which are both of the optical guide which face the pushed position of the moving unit in the storing box.
In this structure, the projected light from the projecting section is immediately received into the optical guide through the receiving surface, and goes into the receiving section through the projecting surface.
Therefore the distance between the projecting section and the receiving section, in other words, the distance which the light passes through in the air is short.
Therefore the diffusion of the light is reduced, as a result, the detecting error is prevented. Also, the electrical parts, for example the photo-electrical sensors, are not located at the banknote storing box.
As a result, the troubles with the electrical parts are reduced.

This present invention is desirable, because a storing amount detecting unit is structured by a detecting projecting surface and a detecting receiving surface which are both of the optical guide which face the full amount position of the banknotes in the storing box.

In this structure, the light which is projected from the projecting section immediately goes into the optical guide through the receiving surface and passes through the incurring section through the detecting projecting surface, next goes into the optical guide again through the detecting receiving surface, next goes into the receiving section from the projecting surface.
Therefore the distance between the projecting section and the receiving section, in other words, the distance which the light passes through the air is short.
Therefore the diffusion of the light is reduced, as a result, the detecting error is prevented.

This present invention is desirable, because the optical guide is made from an optical resin.
In this structure, the optical guide can be made by integral molding.
Therefore, if the shape is a complex shape, its manufacturing can easier achieve better uniformity and may be more inexpensive.
Especially for the outside surface of the optical guide a function is required which reflects the light to guide the passing light in the inside.
Therefore, the outside surface is made up of a mirror finish. If the optical guide is made by integral molding, the outer surface of the optical guide is made up by the mirror finish at the molding.

This present invention is desirable, because the optical resin is an acrylate resin.
In this structure, the acrylate resin does not change color but stands well during time.

Accordingly, in this present invention an error based on changing the color does not occur.
Also the acrylate resin has a hardness which is at predetermined levels.
Therefore the frictional wear of the optical guide is little.

This present invention is desirable, because the optical resin is an acrylate resin.
In this structure, the optical guide is small-sized and inexpensive, because an optical guide includes the receiving surface, the detecting projecting surface, the detecting receiving surface and the projecting surface.

This present invention is desirable, because all of the projecting surfaces and the receiving surfaces are located at the surface.
In this structure, the receiving surfaces and the projecting surfaces both of the plural optical guides are located at the one surface.
Therefore the projecting and receiving sections which correspond to the optical guides are located at one surface.
In other words, the projecting and receiving section are located at one base board.
Accordingly the assembling of the banknote receiving unit is better and inexpensive.
Also, if the receiving surface and projecting surface of the optical guide are cleaned, the operator only needs to clean one surface.
Therefore the cleaning is easy.

This present invention is desirable, because the light emitting element of the projecting section is fixed at the upper end of a cylinder which extends perpendicular; the photo acceptance element of the receiving section is fixed at the upper end of a cylinder which extends perpendicular.
In this structure, the light emitting element and the photo acceptance element are attached at the upper section of the cylinder.
In other words, the light emitting element and the photo acceptance element are located at the upper space which is closed at the upper end.
Therefore the rising air-current seldom occurs at the upper space.
As a result, if the dust goes into the inside of the banknote storing box, dust seldom adheres on the emitting element and the photo acceptance element.

This present invention is desirable, because the projecting section is located at the upper position from the lower surface of the cylinder over the diameter of the cylinder; the receiving section is located at the upper position from the lower surface of the lower surface of the cylinder over the diameter of the cylinder.
In this structure, the emitting element and the photo acceptance element are located upwards and are located over the lower surface of the cylinder at the diameter of the cylinder. In an experiment, if the upper end of the space is closed, the rising air-current occurs a little at the lower space, however the rising air-current does not go into the upper space over the diameter of the cylinder, because the rising air-current receive the friction resistance from the around wall.
Therefore the dust does not adhere on the emitting element and the photo acceptance element.

### Preferred Embodiments of the Invention

Fig. 1 is a perspective view of the situation in which the banknote storing box was drawn out from the banknote receiving unit of the embodiment.
Fig. 2 is an explanation view of the driving unit of the banknote moving unit of the embodiment.
Fig. 3 is a cross section view of the situation in which the banknote storing box is assembled into the banknote receiving unit of the embodiment.
Fig. 4 is a cross section view of the situation where the pusher is located at the pushed position of the banknote moving unit of the embodiment.
Fig. 5 is an enlarged cross section view of the banknote storing box detecting unit of the embodiment.
Fig. 6 is an enlarged cross section view of the banknote position detecting unit of the embodiment.
Fig. 7 is a cross section view for explaining the standby detecting unit of the banknote moving unit of the embodiment.
Fig. 8 is an enlarged cross section view of the standby detecting unit of the banknote moving unit of the embodiment.
Fig. 9 is an enlarged cross section view of the pushed detecting unit of the banknote moving unit of the embodiment.
Fig. 10 is an explanation view of the stored amount detecting unit of the embodiment.

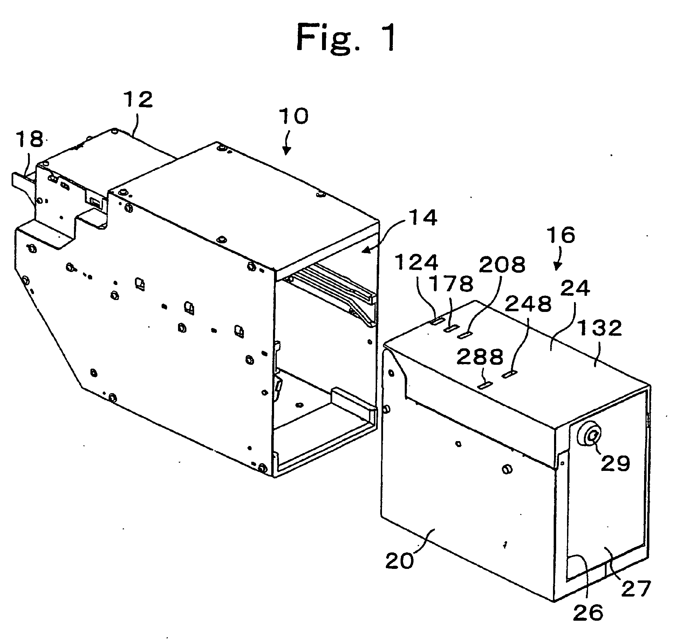

As shown in figure 1, a banknote receiving unit 10 includes a banknote accepting unit 12 which is located at the front upper section, a banknote storing box 16 which is located in a safe space 14 which is located in the rear of the accepting unit, also they are locked by a locking unit (not shown).
Said banknote receiving unit 10 is built in either a vending machine, an exchanging machine or other automatic machine, also only a banknote guide 18 of said banknote accepting unit 12 is located at the outside of the machine.

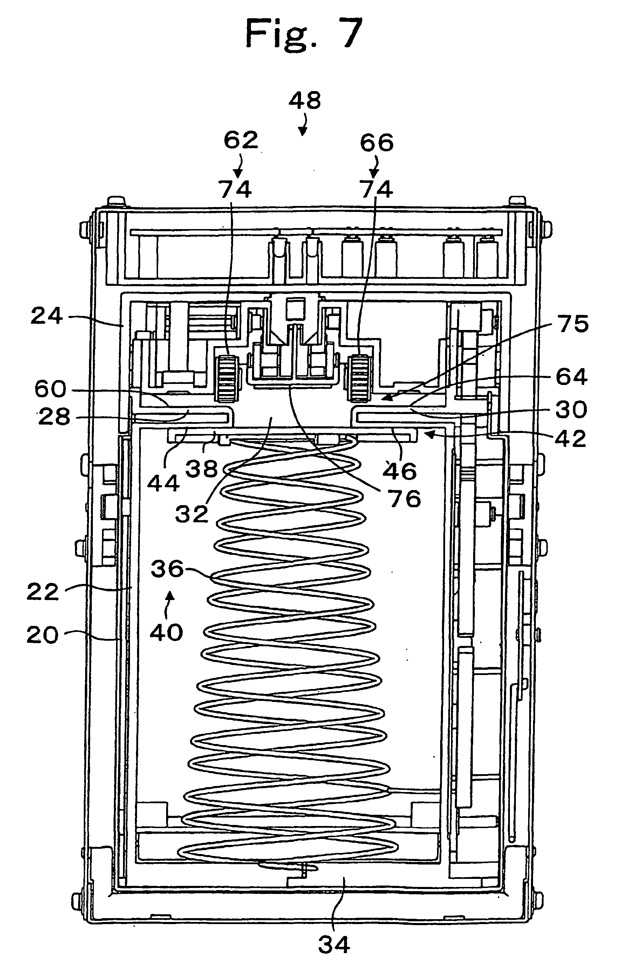

Next, the structure of a banknote storing box 16 is explained. As shown in figure 1 and 7, said banknote storing box 16 includes a frame 20 which is made up of a sheet metal and is box-like in shape, a storing box 22 which is made from a resin and a storing unit box 24 which is made from a resin and is located on the storing box 16.
Said storing box 22 is fitted into said frame 20.
Said banknote storing box 16 is approximately like a long sideways cube.

Next the structure of said storing box 22 is explained (mainly shown in figure 7).
The storing box 22 has an opening at a rear side wall 26, a left top board 28 which protrudes towards the center from the left side wall, a right top board 30 which protrudes towards the center from the right side wall and made up of a pushing passageway 32 which extends towards the moving direction and is located between top boards 28 and 30.
A banknote supporting unit 40 is located in said storing box 22 which includes a pair of springs 36 which are fixed at a bottom wall 34 in said storing box 22 and a supporting board 38 which is fixed at the upper ends of the springs 36.
A banknote storing section 42 is enclosed by a supporting board 38, a lower surface 44 of said left top board 28 and a lower surface 46 of said right top board 30.
The opening of said rear side wall 26 is closed by a lid 27 where the lower section can pivot at said storing box 22 and is locked at said storing unit box 24 by a locking unit 29.

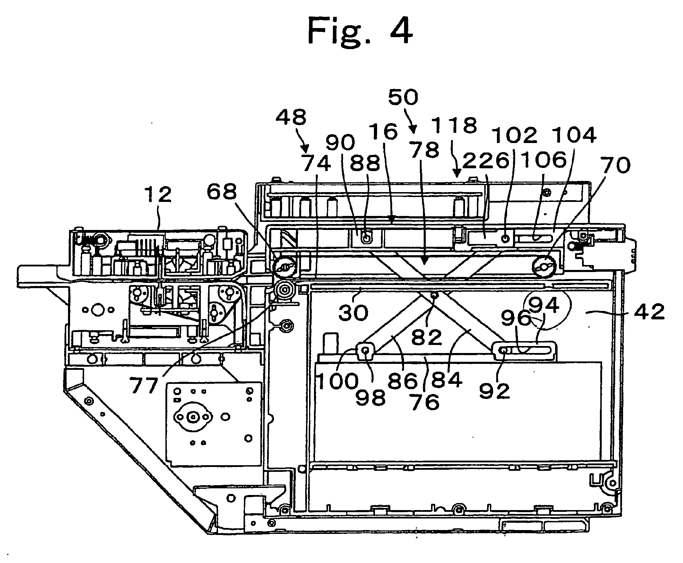

Next the structure of said storing unit box 24 is explained (mainly shown in figure 4).
A banknote transporting unit 48 and a banknote moving unit 50 are built in said storing unit box 24.
A downward slanting surface 54 faces to an exit 52 of said banknote accepting unit 12 and forms a banknote entry 58 together with an upward slanting surface 56 of the side of said storing box 22.
Said banknote entry 58 is horn-like in shape.

Next, said banknote transporting unit 48 is explained.
As shown in figure 7, said banknote transporting unit 48 includes a left belt unit 62. which faces to said left upper surface of said left top board 28 and a right belt unit 66 which faces to said right upper surface 64 of said right top board 30.
A left and right belt unit 62 and 66 are of the same structure, said right belt unit 66 is explained for convenience. A timing belt 74 is put around between a timing pulley 68 which is located relatively to said banknote entry 58 and a timing pulley 70 which is located at the side of said lid 27.
The under surface of said timing belt 74 is away from the right upper surface 64 at a thickness of the banknote.
Said timing pulley 68 is driven by the motor of said banknote accepting unit 12 and rotates in the counterclockwise direction in figure 4.

Said timing belt 74 which is put around between the pulleys 68 and 70 has contact with said right upper surface 64, because it can move away from the right upper surface 64.
The space which is enclosed by the lower surface of said timing belt 74, said right upper surface 64 and said left upper surface is a banknote moving passageway 75.

A pushing roller 77 is located relative to said timing pulley 68 at a upward slanting surface 56 of said storing box 22, and the surface resiliently has contact with the timing belt 74. Accordingly, the banknote which is transported from said exit 52 is held between the lower surface of said timing belt 74 and a holding roller 77 and is drawn into the inside of said banknote storing box 16, and is transported by the friction of the under surface of said belt 74 at the same time, it is guided by said right upper surface 64 and said left upper surface 60.
Therefore said banknote transporting unit 48 has a function which guides the banknote along said left top board 28 and said right top board 30.
In other words, said banknote transporting unit 48 can be changed to another unit which has the same function.

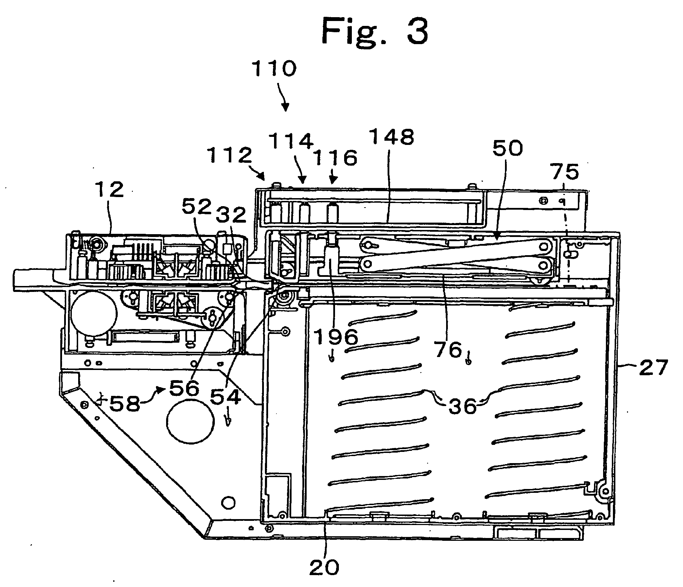

Next, said banknote moving unit 50 is explained.
Said moving unit 50 includes a pusher 76 which is a plate and is for moving the banknote, an expanding unit 78 and a driving unit 80 for the expanding unit 78.
As shown in figures 3 and 4, said expanding unit 78 has a function which moves said pusher 76 at a predetermined stroke and parallel.
Said expanding unit 78 includes a first link 84 and a second link 86 which are of the same length and can pivot at the middle section.

A shaft 88 which is fixed at the upper section of said first link 84 can pivot on a bearing 90 at the under surface of said storing unit box 24.
A shaft 92 is located at the lower section and can slide in a first guiding groove 96 of a first guiding board 94.

Said first guiding groove 96 extends parallel to said pusher 76.
Said shaft 98 which is fixed at the lower section of said second link 86 can pivot at a bearing 100 which is fixed at the upper surface of said pusher 76.
A shaft 102 which is fixed at the upper section can slide in a guiding hole 103 of a second guiding board 104 which is located at the under surface of said storing unit box 24. Therefore, when the shaft 88 pivots, said pusher 76 is moved upwards and downwards in parallel.

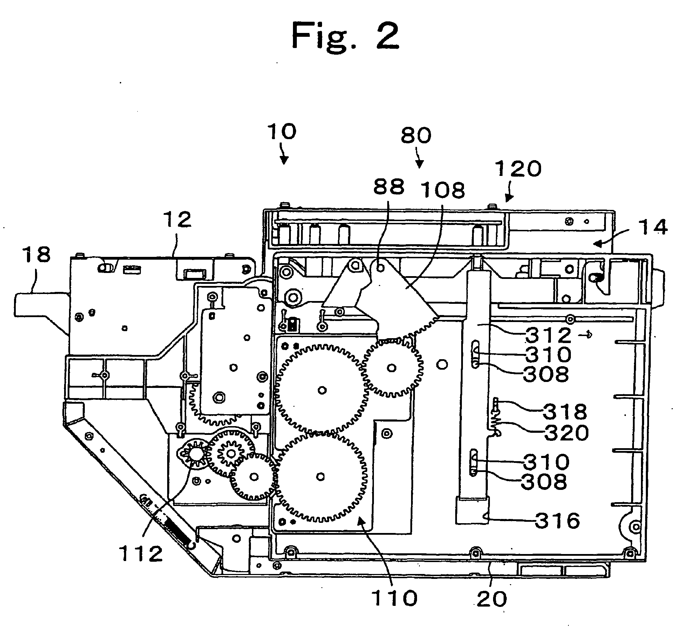

Next, the driving unit 80 is explained referring to figure 2. A sector gear 108 is fixed at the left end section of said shaft 88 and is engaged with a driving gear 112 which is fixed at the shaft of the driving motor of said banknote receiving unit 10 through the reducing gear mechanism.
In other words, said sector gear 108 pivots in the counterclockwise direction based on the counterclockwise direction of said driving gear 112, and said pusher 76 moves upwards.
When the pusher 76 moves to the most upper position, the under surface of said pusher 76 is located at the opposite side of said banknote storing section 42.
In other words, the under surface is located over said banknote moving passageway 75.

When said sector gear 108 pivots in the clockwise direction, said pusher 76 crosses said banknote moving passageway 75, and goes into said banknote storing section 42 through said pushing passageway 32, and pushes the supporting board 38 to a predetermined position through the banknote.
Therefore the banknote which is located at said banknote moving passageway 75 passes through said pushing passageway 32 and is U-like in shape, afterwards it goes into said banknote storing section 42.
When said pusher 76 left from said banknote storing section 42, the banknote is held between said under surfaces 44, 46 and said supporting board 38.
In other words, the banknotes are stored in a piled up position.

Next, the structure of a condition detecting unit 110 is explained.
In this embodiment, said condition detecting unit 110 includes a storing box detecting unit 112 which detects said banknote storing box 16, a banknote position detecting unit 114 which detects the banknote position at said banknote moving passageway 75 in said banknote storing box 16, a standby position detecting unit 116 which detects the standby position of said pusher 76, a pushed position detecting unit 118 which detects the pushed position of said pusher 76 and a storing amount detecting unit 120 which detects the full situation of said banknote storing section 42.

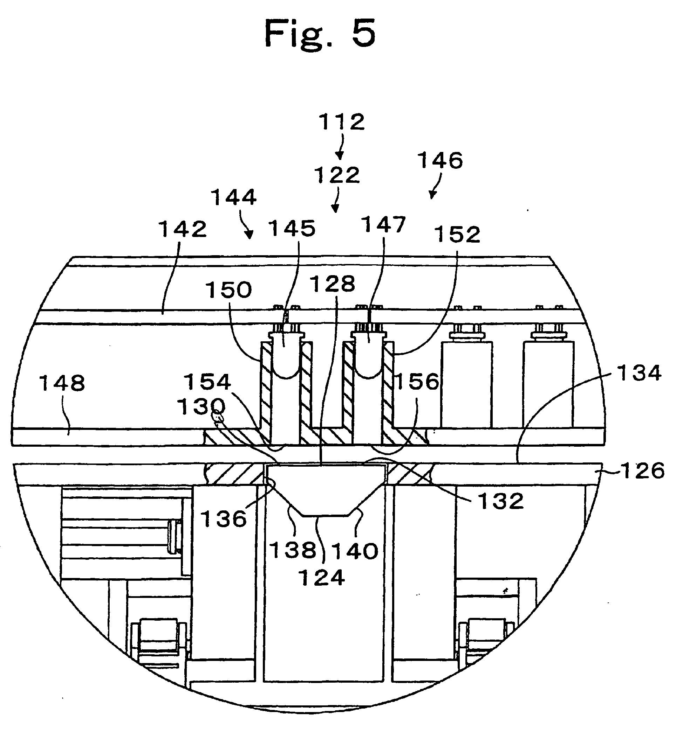

Firstly, the storing box detecting unit 112 is explained referring to figure 3 and 5.
Said storing box detecting unit 112 includes a projecting and receiving section 122 and a box optical guide 124.
Said box optical guide 124 is fixed at a top board 126 of said storing unit box 24, in other words, claws (not shown) of said optical guide 124 hook to the stairs (not shown) of said top board 126.
A receiving surface 128 and a projecting surface 132 are located at an upper surface 134.

Said upper surface 128 fits into a hole 136 of said top board 126 and is located at the same surface to said upper surface 134.

Said box optical guide 124 is made from a penetrating resin and is an inverted trapezoid, and includes a first reflecting surface 138 and a second reflecting surface 140.
Said first reflecting surface 138 is located under and faces to the receiving surface 130 and crosses to the extending line of said receiving surface 130 at 45 degrees.
Said second reflecting surface 140 is located under and faces to the projecting surface 132 and crosses to the extending line of said projecting surface 132 at 45 degrees.
Therefore, said first reflecting surface 138 and said second reflecting surface 140 face to each other.
The wall surface which is around said box optical guide 124 is made up of a mirror finish for increasing the reflectance.
In other words, if the wall surface of said optical guide 124 is the mirror finish, the reflectance can get near the total reflection, because the entry angle of the light in said optical guide 124 is smaller.
Therefore, the attenuation of the light is prevented drastically.

Also, the penetrating resin is an acrylate resin, and is desirable.
Said acrylate resin is harder than other penetrating resins, in other words, it resists abrasion.
Therefore, the acrylate resin is suitable to the banknote handling unit.
Furthermore, said optical guide 124 can be made up of an optical guide which unifies said receiving surface 130 and said first reflecting surface 138 and another optical guide which unifies said second reflecting surface 140 and said projecting surface 132.
If the optical guides are unified as an embodiment, the attenuation of the light is prevented and the costs are reduced, because the structuring parts are reduced.

Next, a projecting and receiving section 122 is explained. Said projecting and receiving section 122 is fixed at the upper inside surface of said safe space 14 of said banknote receiving unit 10.
A projecting section 144 and a receiving section 146 are fixed on a board 142; they show a downward tendency and are slightly away from each other.
Said projecting section 144 includes an emitting element 145, for example a light-emitting diode etc., said receiving section 146 includes a photo acceptance unit 145, for example a phototransistor etc., and a cylinder 152.

Said emitting element 145 is inserted into the upper section of a cylinder 150 which extends upwards and perpendicular from a cover 148 which is located below a base 142.
Also, the position is located over a lower opening 154 with a double size of the diameter of said cylinder 150.
Said lower section 154 is located right just above said receiving surface 130.
Said photo acceptance element 147 is inserted into said cylinder 152.
A lower opening 156 of said cylinder 152 is located right just above said projecting surface 132.
If said emitting element 145 and said photo acceptance element 147 are located at the upper sections of said cylinders 150, 152 and are located above said lower openings 154, 156 at a diameter of said cylinders 150, 152, the rising air-current does not occur in the cylinders, because the upper openings are closed by said emitting elements 145, 147.

Therefore, if the dust goes into said safe space 14, the rising air-current does not get into said emitting element 145 or said photo acceptance element 147.
As a result, the dust does not adhere on said emitting element 145 or said photo acceptance element 147.
If the rising air-current slightly occurs, the current does not go over the diameter of the cylinder.
Therefore, dust does not adhere on said emitting element 145 or said photo acceptance element 147.
Also, the projecting light from said emitting element 145 is reflected by the wall of said cylinder 150 and is guided.
The emitting light from said projecting surface 132 is reflected by the wall of said cylinder 152 and is guided.
As a result, the diffusion of the light is inhibited.

Therefore, if said storing box 16 is located at a predetermined position at said safe space 14, the emitting light from said emitting element 145 goes in said cylinder 150 and goes into said receiving surface 130 in an approximate right angle. The emitting light passes through said optical guide 124, and is reflected by said first reflecting surface 138 in an approximate right angle and goes to the lateral, next is reflected by said second reflecting surface 140 in an approximately right angle and upward, next goes into said cylinder 152 through said projecting surface 132, finally it goes into said photo acceptance element 147.
Therefore, the existence of said storing box 16 can distinguish based on the received light volume of said photo acceptance element 147.

In other words, if there is no storing box 16, there is no said box optical guide 124.
Therefore, said photo acceptance element 147 does not receive the light.
If the dust adheres on said receiving surface 130 and said projecting surface 132, the dust is polished by the wiping at said upper surface 134, because said receiving surface 130 and said projecting surface 132 are located on said upper surface 134.
As a result, the cleaning handling is easy.

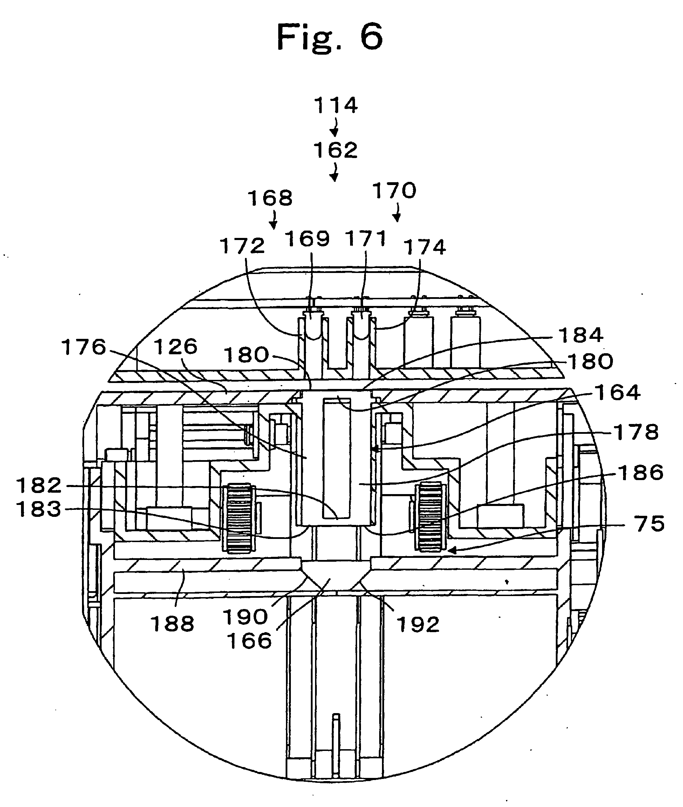

Next, the banknote position detecting unit 114 is explained referring to figure 6.
Said banknote position detecting unit 114 has a function which detects the storing position of a genuine banknote which is distinguished by the banknote accepting unit 12 in said storing box 16.
In other words, the rear end of the received banknote which goes into said entry 32 is detected by said banknote position detecting unit 114.
Afterwards, said banknote transporting unit 48 is stopped.

Said banknote position detecting unit 114 includes a banknote projecting and receiving section 162, a banknote optical guide 164 and a reflector 166.
Said banknote projecting and receiving section 162 includes a projecting section 168 and a receiving section 170.
Said emitting element 168 is inserted into a cylinder 172 at said projecting section 168
A photo acceptance element 174 is inserted into a cylinder 174 at said receiving section 170.
Both the structures of said projecting section 168 and said receiving section 170 are the same as both said projecting section 144 and said receiving section 146 of said storing box detecting unit 112.
Said banknote optical guide 164 is fixed at the reverse of said top board 126 by a bracket (not shown) and faces to said projecting and receiving section 162.

Said banknote optical guide 164 includes an emitting optical guide 176 which extents perpendicular at right just under said projecting section 168 and a receiving optical guide 178 which extents perpendicular at right just under said receiving section 178; they are connected by stays 180,182 and have a rectangle ring shape.
If said emitting optical guide 176 and said receiving optical guide 178 are unified, the number of parts reduces. Accordingly, the assembling and the costs are better.
However, said emitting optical guide 176 and said receiving optical guide 178 can be separated.
The upper surface of said emitting optical guide 176 is a receiving surface 180, and the lower surface is a detecting projecting surface 183.
The upper surface of said receiving optical guide 178 is a projecting surface 184, and the lower surface is a detecting receiving surface 186.

Said detecting projecting surface 183 and said detecting receiving surface 186 are located at side by side to the moving direction of the banknote between said left belt unit 62 and said right belt unit 66 which are located above said banknote moving passageway 75 near said banknote entry 32.
Also, said banknote reflector 166 is fixed at a banknote guide 188 which is located below said banknote moving passageway 75. In other words, the claw (not shown) of said banknote reflector 166 hooks to a stair of said banknote guide 88.

Said reflector 166 includes a first reflecting surface 190 and a second reflecting surface 192 and is the same as said box reflector 124.
Said first reflecting surface 190 faces to said detecting projecting surface 183 and said second reflecting surface 192 faces to said detecting receiving surface 186.
Also, said first reflecting surface 190 and said second reflecting surface 192 are located face to face as the same as said box reflector 124.

In this structure, when there is no banknote in said banknote moving passageway 75, the emitted light from an emitting element 169 goes into said projecting optical guide 176 through said receiving surface 180, next is guided, next crosses said banknote moving passageway 75 through said detecting projecting surface 183 and goes into said banknote reflector 166, then it is reflected by said first reflecting surface 190 towards the lateral, next it is reflected upwards by said second reflecting surface 192, next it crosses said banknote moving passageway 75 again, next goes into said receiving optical guide 178 and is guided, then it goes into a photo acceptance element 171 from said projecting surface 184 through said cylinder 174.

If there is the banknote in said banknote passageway 75, the emitted light from said detecting projecting surface 182 is cut off by the banknote.
Therefore, the light is not received by said photo acceptance element 171.
Accordingly, if said photo acceptance element 171 does not receive the light at a predetermined time, afterwards said photo acceptance element 171 received the light again, the situation can be distinguished the rear end of the banknote below banknote position detecting unit 114.
Therefore, when the light is re-received, said banknote transporting unit 48 is stopped.
As a result, the banknote is stopped at a suitable position for pushing it into said storing section 42.

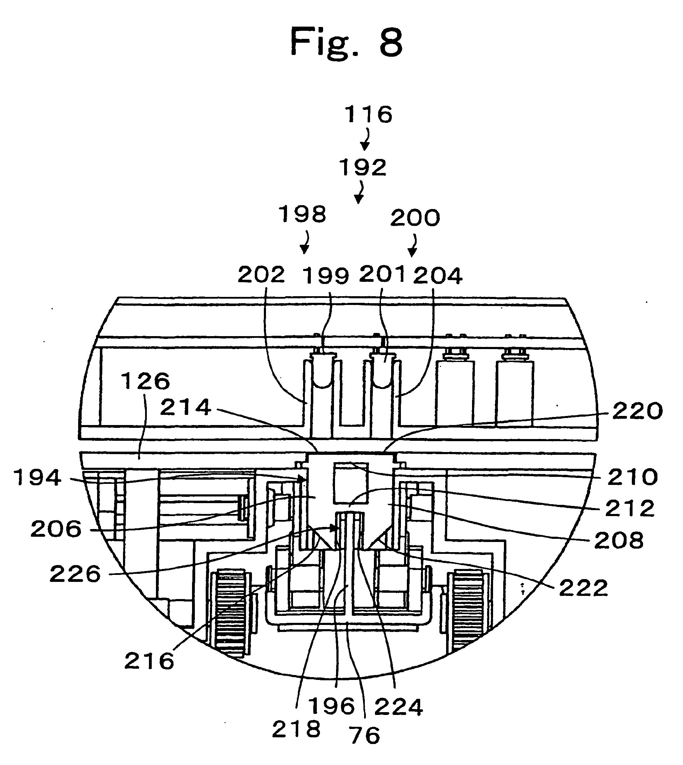

Next, the standby position detecting unit 116 of the banknote moving unit 50 is explained referring to figure 8.
Said standby position detecting unit 116 includes a standby projecting and receiving section 192, a standby optical guide section 194 and a standby detecting piece 196.
Said standby projecting and receiving section 192 includes a projecting section 198 and a receiving section 200.
An emitting element 199 of said projecting section 198 is inserted into a cylinder 202.
A photo acceptance element 201 of said receiving section 200 is inserted into a cylinder 204.
Both said structures of projecting section 198 and said receiving section 200 are the same as both said projecting section 144 and said receiving section 146 of said storing box detecting unit 112.

A standby optical guide 194 is fixed at the reverse of a top board 126 which faces to said projecting and receiving section 192 by a bracket (not shown).
Said standby optical guide 194 includes a projecting optical guide 206 which extends perpendicular right under said projecting section 198 and a receiving optical guide 208 which extents perpendicular right under said receiving section 200, and are connected by stays 210, 212, and are gate-like in shape.

If said emitting optical guide 206 and said receiving optical guide 208 are unified, the number of parts reduces.
Accordingly, the assembling and the costs are better.
However, said emitting optical guide 196 and said receiving optical guide 198 can be separated.

The upper surface of said emitting optical guide 196 is a receiving surface 214, and a reflecting surface 216 slants to the extent line of said receiving surface 214 at 45 degrees, and the side surface is a detecting projecting surface 218. The upper surface of said receiving optical guide 208 is a projecting surface 220, and a reflecting surface 222 slants to the extent line of said projecting surface 220 at 45 degrees, and the side surface is a detecting receiving surface 224.
A reflecting surface 216 and a reflecting surface 222 are located face to face as the same as said box reflector 124.
Said detecting projecting surface 218 and said detecting receiving surface 224 are parallel and extent perpendicular, and a structure detecting space 226.
Said detecting space 226 is the access detecting section. Therefore, the light which is emitted from said emitting element 199 goes into a projecting optical guide 206 through 214, next it is reflected by said reflecting surface 216 to the lateral, next it crosses said detecting space 226 from said detecting projecting surface 218, then it goes into said receiving optical guide 208 through said detecting receiving surface 224.
The light in said receiving optical guide 208 is reflected upwards by said reflecting surface 222, next goes into said photo acceptance element 201 through said projecting surface 220.

A standby detecting piece 196 is fixed at the upper surface of the side of said banknote accepting unit 12 of the pusher 76. When said pusher 76 is located at the standby position, said standby detecting piece 196 is located at said detecting space 226, and cuts off the light.
Therefore, when said photo acceptance element 201 does not receive the light, said pusher 76 is distinguished in the standby position.
When pusher 76 is detected at the standby position, the motor is stopped.
In other words, a driving gear 112 is stopped, and said pusher 76 is kept at the standby position.

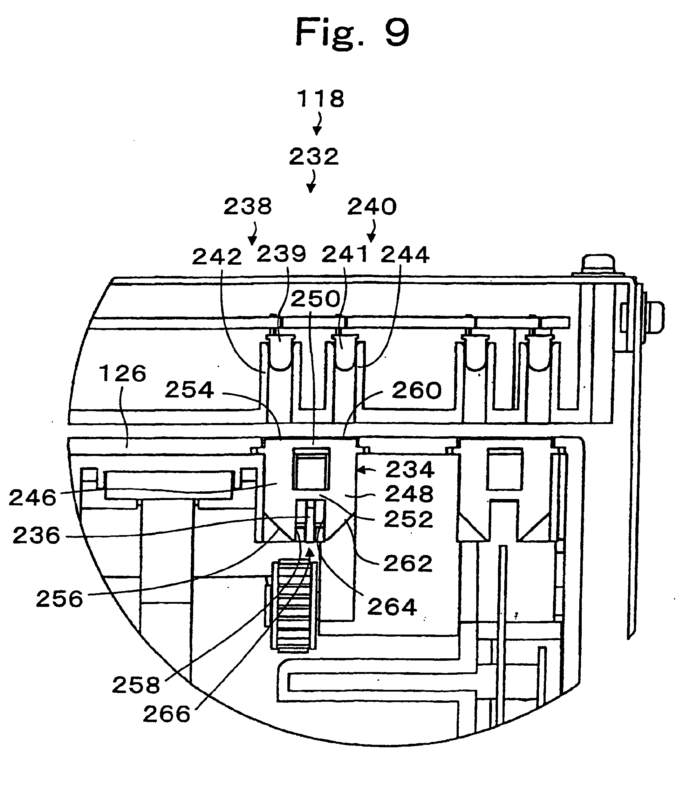

Next, the moving position detecting unit 118 is explained referring to figures 4 and 9.
Said moving position detecting unit 118 includes a moving projecting and receiving section 232, a moving optical guide 234 and a moving detecting piece 236.
Said moving projecting and receiving section 232 includes a projecting section 238 and a receiving section 240.
An emitting element 239 is inserted into a cylinder 242 at said projecting section 238.
A photo acceptance element 241 is inserted into a cylinder 244 at said receiving section 240.
The both structures of said projecting section 232 and said receiving section 240 are the same as both said projecting section 144 and said receiving section 146 of said storing box detecting unit 112.

Said moving optical guide 234 is fixed at the reverse of said top board 126 by a bracket (not shown) and faces to said moving projecting and receiving section 232.

Said moving optical guide 234 includes a projecting optical guide 246 which extends perpendicular right under said projecting section 238 and a receiving optical guide 248 which extents perpendicular right under said receiving section 240, and are connected by stays 250, 252, and it is gate-like in shape.
If said emitting optical guide 246 and said receiving optical guide 248 are unified, the number of parts is reduced.
Accordingly, the assembling and the costs are better.
However, said emitting optical guide 246 and said receiving optical guide 248 can be separated.

The upper surface of said emitting optical guide 246 is a receiving surface 254, and a reflecting surface 256 slants to the extent line of said receiving surface 254 at 45 degrees, and the side surface is a detecting projecting surface 258. The upper surface of said receiving optical guide 248 is a projecting surface 260, and a reflecting surface 262 slants to the extent line of said projecting surface 260 at 45 degrees, and the side surface is a detecting receiving surface 264.
Said detecting projecting surface 258 and said detecting receiving surface 264 are parallel and extent perpendicular, and they structure a detecting space 266.
Said detecting space 266 is the access detecting section.
Said reflecting surface 256 and said reflecting surface 262 are located face to face.
Therefore, the light which is emitted from said emitting element 199 goes into said projecting optical guide 246 through 254, next it is reflected by said reflecting surface 256 to the lateral, next it crosses said detecting space 266 from said detecting projecting surface 258, then it goes into said receiving optical guide 248 through said detecting receiving surface 264.

The light in said receiving optical guide 248 is reflected upwards by said reflecting surface 262, next it goes into said photo acceptance element 241 through said projecting surface 260.

Said moving detecting piece 236 is fixed at said shaft 102 of said expanding and contracting unit 78, and is moved in a body together with said pusher 76.
When said pusher 76 is located at most the moving position (most lower position), said moving detecting piece 236 is located at said detecting space 266, and cuts off the light.
Therefore, when said photo acceptance element 241 does not receive the light, said pusher 76 is distinguished in the moving position.
When said pusher 76 is detected at the moving position, the motor is stopped.
In other words, said driving gear 112 is stopped of the rotation in the clockwise direction, afterwards said driving gear 112 is rotated in the counter clockwise direction.
Therefore, said pusher 76 moves from the moving position to the standby position.

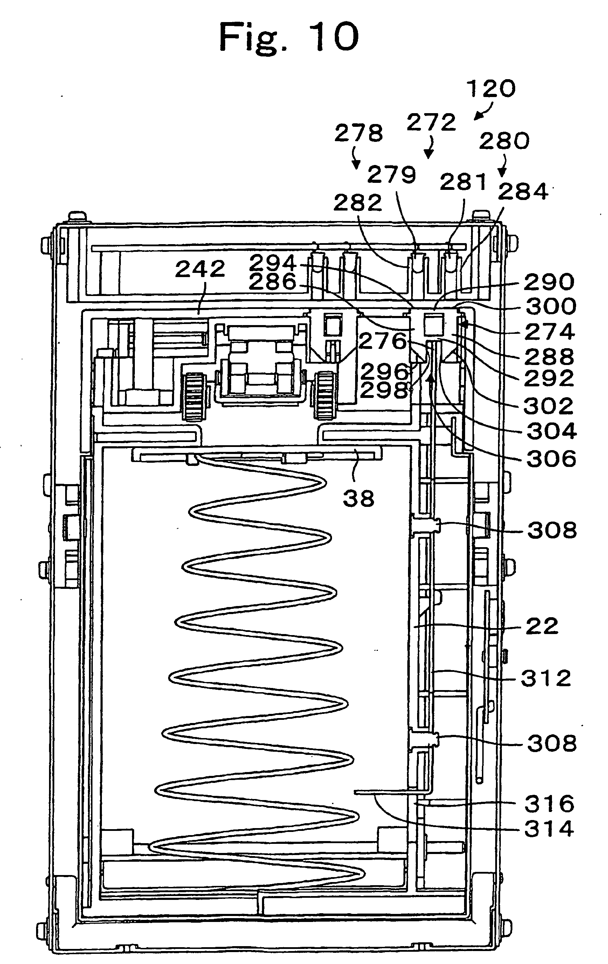

Next, the storing amount detecting unit 120 is explained referring to figure 2 and 10.
Said storing amount detecting unit 120 includes a storing projecting and receiving section 272, a storing optical guide section 274 and a storing detecting piece 276.
Said storing projecting and receiving section 272 includes a projecting section 278 and a receiving section 280.
An emitting element 279 is inserted into a cylinder 282 at said projecting section 272.
A photo acceptance element 281 is inserted into a cylinder 284 at said receiving section 280.

The both structures of said projecting section 278 and said receiving section 280 are the same as both said projecting section 144 and said receiving section 146 of said storing box detecting unit 112.

Said storing optical guide 274 is fixed at the reverse of said top board 126 which faces to said storing projecting and receiving section 272 by a bracket (not shown).
Said storing optical guide 274 includes a projecting optical guide 286 which extends perpendicular right under said projecting section 278 and a receiving optical guide 288 which extents perpendicular right under said receiving section 280, and are connected by stays 290, 292, then it is gate-like in shape.
If said emitting optical guide 286 and said receiving optical guide 288 are unified, the number of parts reduces.
Accordingly, the assembling and the costs are better.
However, said emitting optical guide 186 and said receiving optical guide 188 can be separated.

The upper surface of said emitting optical guide 286 is a receiving surface 294, and a reflecting surface 296 slants to the extent line of said receiving surface 294 at 45 degrees, and the side surface is a detecting projecting surface 298. The upper surface of said receiving optical guide 288 is a projecting surface 300, and a reflecting surface 302 slants to the extent line of said projecting surface 300 at 45 degrees, and the side surface is a detecting receiving surface 304. Said reflecting surface 296 and said reflecting surface 302 are located face to face.
Said detecting projecting surface 298 and said detecting receiving surface 304 are parallel and extent perpendicular, and they structure a detecting space 306.

Said detecting space 306 is the access detecting section. Therefore, the light which is emitted from said emitting element 279 goes into said projecting optical guide 286 through 294, next it is reflected by said reflecting surface 296 to the lateral, next crosses said detecting space 306 from said detecting projecting surface 298, next goes into said receiving optical guide 288 through said detecting receiving surface 304.
The light in said receiving optical guide 288 is reflected upwards by said reflecting surface 302, next goes into said photo acceptance element 281 through said projecting surface 300.

Said storing detecting piece 276 is made up of the upper section of a slider 312 which has an elongate hole 310 which is inserted guiding a pair of pins 308 which are fixed at the side wall of said storing box 22 and located away at a predetermined distance.
A lower section 314 of said slider 312 bends at a right angle and projects into said storing box 22 through an opening 316. As shown in figure 2, a spring 320 hooks between a hook 318 which projects from the side wall of said storing box 22 and said slider 312.
Therefore, said slider 312 is urged towards said supporting board 38.
When the amount of the stored banknotes is under a predetermined amount, said slider 312 is moved upwards, and is stopped by said guiding pin 308.

At the same time, said storing detecting piece 276 is located at said storing detecting space 306.
Therefore, the light from said emitting element 279 is cut off by said storing detecting piece 276.

When said supporting board 38 moves downwards by the banknotes, the lower section 314 moves downwards, and said storing detecting piece 276 goes out from said storing detecting space 306.
Therefore, when said photo acceptance element 281 receives the light, said supporting board 38 is distinguished in the full position.
Meanwhile, when the banknote is moved into said banknote storing section 42, said pusher 76 goes into said banknote storing section 42 at a predetermined distance.
Accordingly, the distinguishing of the full situation is executed at a timing in which said pusher 76 is located at the moving position.
In other words, when said moving position detecting unit 118 detects said moving detecting piece 226 and said storing amount detecting unit 120 does not detect said storing detecting piece 276, the full situation of the banknotes is distinguished.

In addition, words such as up and down and left and right are used for user's convenience.
Therefore, this present invention is not limited by the words.

The first purpose of this present invention is to provide a condition detecting unit which hardly receives the effect of dust.
The second purpose of this invention is to provide a condition detecting unit which can detect at roughly attaching position of the banknote storing unit.
The third purpose of this invention is to provide a detecting unit which is cheaper in spite of plural detecting units.

## Claims

1. A condition detecting unit of a banknote storing unit comprising:
a banknote storing box (16) which can be detachable to a banknote receiving unit (10) which receives a banknote which is pushed by a pusher (76) of a moving unit (50), wherein the moving unit (50) is built in the storing box and can store banknotes in a pile; **characterised by**
an optical guide (124, 164, 194, 234, 274), wherein light which passes through the optical guide is guided by the outer walls of the optical guide, the optical guide comprising
a light receiving surface (130, 180, 214, 254, 294) and a light projecting surface (130, 180, 214, 254, 294) which are located at a surface (134) of the banknote storing box (16);
a receiving section (146, 170, 200, 240, 280) including a photo acceptance element (147, 171, 201, 241, 281) and a projecting section (144, 168, 198, 238, 278) including a light emitting element (145, 169, 199, 239, 279) which receiving section and projecting section are located at the banknote receiving unit (10).

2. The condition detecting unit of a banknote storing unit as claimed in claim 1, wherein the optical guide (124, 164, 194, 234, 274) includes a detecting projecting surface (183, 218, 258, 298) which faces the detected section in the bank-note storing box (16) and a detecting receiving surface (186, 224, 264, 304) which faces the receiving surface.

3. The condition detecting unit of a banknote storing unit as claimed in claim 1 or 2, wherein a banknote position detecting unit (114) includes a detecting projecting surface (183) and a reflector (166) which is located at the side of a banknote moving passageway, (75) in the banknote storing box (16) and is located on the opposite side of the banknote moving passageway (75) with regard to the optical guide (164).

4. The condition detecting unit of a banknote storing unit according to any of the preceding claims, wherein a standby position detecting unit (116) is structured by said detecting projecting surface (218) and said detecting receiving surface (224) which are both of the optical guide (194) and which face the standby position of the moving unit in the storing box.

5. The condition detecting unit of a banknote storing unit according to any one of claims 2 to 4, wherein a pushing position detecting unit (118) is structured by said detecting projecting surface (258) and said detecting receiving surface (264) which are both of the optical guide (234) and which face the pushed position of the moving unit in the storing box.

6. The condition detecting unit of a banknote storing unit according to any one of claims 2 to 5, wherein a storing amount detecting unit (120) is structured by said detecting projecting surface (298) and said detecting receiving surface (304) which are both of the optical guide (274) and which face the full amount position of the banknotes in the storing box.

7. The condition detecting unit of a banknote storing unit according to any one of the preceding claims, wherein said optical guide (124, 164, 194, 234, 274) is made from an optical resin.

8. The condition detecting unit of a banknote storing unit according to claim 7, wherein the optical resin is an acrylate resin.

9. The condition detecting unit of a banknote storing unit according to any one of claims 2 to 8, wherein
the optical guide (124, 164, 194, 234, 274) is gate-like in shape;
the surfaces of the ends of the columns face each other and are a pair of reflecting surfaces;
a side surface of a column is the detecting projecting surface (218, 258, 298) and another surface of the column is the detecting receiving surface (224, 264, 304);
the light projecting surface (220, 260, 300) and the light receiving surface (214, 254, 294) are located at the end which face the reflecting surfaces.

10. The condition detecting unit of a banknote storing unit according to any one of the preceding claims, wherein all of the light projecting surfaces and the light receiving surfaces are located on one surface (134).

11. The condition detecting unit of a banknote storing unit according to any one of the preceding claims, wherein the light emitting element (145, 169, 199, 239, 279) of
the projecting section (144, 168, 198, 238, 278) is fixed at the upper end of a cylinder (150, 172, 202, 242, 282) which extends perpendicular; wherein the photo acceptance element (147, 171, 201, 241, 281) of
the receiving section (146, 170, 200, 240, 280) is fixed at the upper end of a cylinder (152, 174, 204, 244, 284) which extends perpendicular.

12. The condition detecting unit of a banknote storing unit according to claim 11, wherein
the projecting section (144, 168, 198, 238, 278) is located at an upper position from the lower surface of the cylinder (150, 172, 202, 242, 282) over the diameter of the cylinder.;
the receiving section (146,170, 200, 240, 280) is located at an upper position from the lower surface of the lower surface of the cylinder(150, 172, 202, 242, 282) over the diameter of the cylinder.

## Patentansprüche

1. Zustandserfassungseinheit einer Geldscheinaufbewahrungseinheit, welche aufweist:
eine Geldscheinaufbewahrungsbox (16), die von einer Geldscheinaufnahmeeinheit (10), die einen Geldschein aufnimmt, der von einem Schieber (76) einer Bewegungseinheit (50) geschoben wird, abnehmbar ist, wobei die Bewegungseinheit (50) in der Aufbewahrungsbox gebildet ist und Geldscheine in einem Stapel aufbewahren kann; **gekennzeichnet durch**
einen optischen Leiter (124, 164, 194, 234, 274), wobei Licht, das **durch** den optischen Leiter hindurchtritt, **durch** die äußeren Wände des optischen Leiters geführt wird, wobei der optische Leiter eine Lichtaufnahmeoberfläche (130, 180, 214, 254, 294) und eine Lichtabstrahloberfläche (130, 180, 214, 254, 294) aufweist, die an einer Oberfläche (134) der Geldscheinaufbewahrungsbox (16) angeordnet sind;
einen Aufnahmeabschnitt (146, 170, 200, 240, 280), der ein Photoannahmeelement (147, 171, 201, 241, 281) aufweist, und einen Abstrahlabschnitt (144, 168, 198, 238, 278), der ein Lichtemissionselement (145, 169, 199, 239, 279) aufweist, wobei der Aufnahmeabschnitt und der Abstrahlabschnitt an der Geldscheinaufnahmeeinheit (10) angeordnet sind.

2. Zustandserfassungseinheit einer Geldscheinaufbewahrungseinheit gemäß Anspruch 1, wobei der optische Leiter (124, 164, 194, 234, 274) eine Erfassungsabstrahloberfläche (183, 218, 258, 298) aufweist, die dem erfaßten Abschnitt in der Geldscheinaufbewahrungsbox (16) zugewandt ist, und eine Erfassungsaufnahmeoberfläche (186, 224, 264, 304), die der Aufnahmeoberfläche zugewandt ist.

3. Zustandserfassungseinheit einer Geldscheinaufbewahrungseinheit gemäß Anspruch 1 oder 2, wobei eine Geldscheinpositionserfassungseinheit (114) eine Erfassungsabstrahloberfläche (183) und einen Reflektor (166), der an der Seite eines Geldscheinbewegungsdurchganges (75) in der Geldscheinaufbewahrungsbox (16) angeordnet ist und auf der gegenüberliegenden Seite des Geldscheinbewegungsdurchganges (75) in bezug auf den optischen Leiter (164) angeordnet ist, aufweist.

4. Zustandserfassungseinheit einer Geldscheinaufbewahrungseinheit gemäß einem der vorangehenden Ansprüche, wobei eine Standbypositionserfassungseinheit (116) durch die Erfassungsabstrahloberfläche (218) und die Erfassungsaufnahmeoberfläche_ (224) aufgebaut ist, die beide von dem optischen Leiter (194) sind und die der Standpyposition der Bewegungseinheit in der Aufbewahrungsbox zugewandt sind.

5. Zustandserfassungseinheit einer Geldscheinaufbewahrungseinheit gemäß einem der Ansprüche 2 bis 4, wobei eine Schiebepositionserfassungseinheit (118) durch die Erfassungsabstrahloberfläche (258) und die Erfassungsaufnahmeoberfläche (264) aufgebaut ist, die beide von dem optischen Leiter (234) sind und die der geschobenen Position der Bewegungseinheit in der Aufbewahrungsbox zugewandt sind.

6. Zustandserfassungseinheit einer Geldscheinaufbewahrungseinheit gemäß einem der Ansprüche 2 bis 5, wobei eine Aufbewahrungsmengenerfassungseinheit (120) durch die Erfassungsabstrahloberfläche (298) und die Erfassungsaufnahmeoberfläche (304) aufgebaut ist, die beide von dem optischen Leiter (274) sind und die der Position voller Menge der Geldscheine in der Aufbewahrungsbox zugewandt sind.

7. Zustandserfassungseinheit einer Geldscheinaufbewahrungseinheit gemäß einem der vorangehenden Ansprüche, wobei der optische Leiter (124, 164, 194, 234, 274) aus einem optischen Harz gebildet ist.

8. Zustandserfassungseinheit einer Geldscheinaufbewahrungseinheit gemäß Anspruch 7, wobei der optische Harz ein Acrylat-Harz ist.

9. Zustandserfassungseinheit einer Geldscheinaufbewahrungseinheit gemäß einem der Ansprüche 2 bis 8, wobei
der optische Leiter (124, 164, 194, 234, 274) in der Form torartig ist;
die Oberflächen der Enden der Säulen einander zugewandt sind und ein Paar Reflexionsoberflächen sind;
eine Seitenoberfläche einer Säule die Erfassungsabstrahloberfläche (218, 258, 298) ist und eine andere Oberfläche der Säule die Erfassungsaufnahmeoberfläche (224, 264, 304) ist;
die Lichtabstrahloberfläche (220, 260, 300) und die Lichtaufnahmeoberfläche (214, 254, 294) an dem Ende angeordnet sind, das den Reflexionsoberflächen zugewandt ist.

10. Zustandserfassungseinheit einer Geldscheinaufbewahrungseinheit gemäß einem der vorangehenden Ansprüche, wobei alle von den Lichtabstrahloberflächen und den Lichtaufnahmeoberflächen auf einer Oberfläche (134) angeordnet sind.

11. Zustandserfassungseinheit einer Geldscheinaufbewahrungseinheit gemäß einem der vorangehenden Ansprüche, wobei das Lichtemissionselement (145, 169, 199, 239, 279) des Abstrahlabschnittes (144, 168, 198, 238, 278) an dem oberen Ende eines Zylinders (150, 172, 202, 242, 282), der sich senkrecht erstreckt, befestigt ist; wobei das Photoannahmeelement (147, 171, 201, 241, 281) des Aufnahmeabschnittes (146, 170, 200, 240, 280) an dem oberen Ende eines Zylinders (152, 174, 204, 244, 284), der sich senkrecht erstreckt, befestigt ist.

12. Zustandserfassungseinheit einer Geldscheinaufbewahrungseinheit gemäß Anspruch 11, wobei der Abstrahlabschnitt (144, 168, 198, 238, 278) an einer oberen Position von der unteren Oberfläche des Zylinders (150, 172, 202, 242, 282) über dem Durchmesser des Zylinders angeordnet ist;
der Aufnahmeabschnitt (146, 170, 200, 240, 280) an einer oberen Position von der unteren Oberfläche der unteren Oberfläche des Zylinders (150, 172, 202, 242, 282) über dem Durchmesser des Zylinders angeordnet ist.

## Revendications

1. Dispositif à détecter une condition d'un réservoir de billets de banque, comprenant :
une boîte de stockage de billets de banque (16) à monter, de façon amovible, à une unité réceptrice (10) de billets de banque, qui reçoit un billet de banque poussé moyennant un poussoir (76) d'une unité mobile (50), dans lequel ladite unité mobile (50) est incorporée dans ladite boîte de stockage et est apte à stocker des billets de banque en une pile ;
**caractérisé par**
un guide de lumière (124, 164, 194, 234, 274), dans lequel de la lumière passée à travers ledit guide de lumière est guidée par les parois extérieures dudit guide de lumière, ce guide de lumière comprenant une surface réceptrice de lumière (130, 180, 214, 254, 294) et une surface de projection de lumière (130, 180, 214, 254, 294), qui se trouve à une surface (134) de ladite boîte de stockage de billets de banque (16) ;
une partie réceptrice (146, 170, 200, 240, 280) renfermant un élément récepteur de lumière (147, 171, 201, 241, 281) et une partie de projection (144, 168, 198, 238, 278) renfermant un élément émetteur de lumière (145, 169, 199, 239, 279), ces parties réceptrice et de projection se trouvant à la ladite unité réceptrice (10).

2. Dispositif à détecter une condition d'un réservoir de billets de banque selon la revendication 1, dans lequel ledit guide de lumière (124, 164, 194, 234, 274) comprend une surface détectrice de projection (183, 218, 258, 298), qui se trouve en face de la partie détectée dans ladite boîte de stockage de billets de banque (16), ainsi qu'une surface détectrice réceptrice (186, 224, 264, 304) en face de ladite surface réceptrice.

3. Dispositif à détecter une condition d'un réservoir de billets de banque selon la revendication 1 ou 2, dans lequel une unité détectrice (114) à détecter la position du billet de banque comprend une surface détectrice de projection (183) et un réflecteur (166), qui se trouve du côté d'un passage (75) de mouvement des billets de banque dans ladite boîte de stockage de billets de banque (16), et qui se trouve du côté opposé dudit passage (75) de mouvement des billets de banque relativement audit guide de lumière (164).

4. Dispositif à détecter une condition d'un réservoir de billets de banque selon une quelconque des revendications précédentes, dans lequel une unité détectrice de réserve à détecter la position (116) est structurée par ladite surface détectrice de projection (218) et ladite surface détectrice réceptrice (224), qui appartiennent audit guide de lumière (194) toutes les deux et qui se trouvent en face de la position de réserve de ladite unité mobile dans ladite boîte de stockage.

5. Dispositif à détecter une condition d'un réservoir de billets de banque selon une quelconque des revendications 2 à 4, dans lequel une unité détectrice (118) à détecter la position poussée est structurée par ladite surface détectrice de projection (258) et ladite surface détectrice réceptrice (298), qui appartiennent audit guide de lumière (234) toutes les deux et qui se trouvent en face de la position poussée de ladite unité mobile dans ladite boîte de stockage.

6. Dispositif à détecter une condition d'un réservoir de billets de banque selon une quelconque des revendications 2 à 5, dans lequel une unité détectrice à détecter la position de volume stocké est structurée par ladite surface détectrice de projection (298) et ladite surface détectrice réceptrice (304), qui appartiennent audit guide de lumière (274) toutes les deux et qui se trouvent en face de la position de volume complet en billets de banque dans ladite boîte de stockage

7. Dispositif à détecter une condition d'un réservoir de billets de banque selon une quelconque des revendications précédentes, dans lequel ledit guide de lumière (124, 164, 194, 234, 274) est composé d'une résine optique.

8. Dispositif à détecter une condition d'un réservoir de billets de banque selon la revendication 7, dans lequel ladite résine optique est une résine en acrylate.

9. Dispositif à détecter une condition d'un réservoir de billets de banque selon une quelconque des revendications 2 à 8, dans lequel
ledit guide de lumière (124, 164, 194, 234, 274) présente une forme similaire à une fenêtre ;
les surfaces aux extrémités des colonnes se trouvent l'une en face de l'autre, en constituent une paire de surfaces réfléchissantes ;
une face latérale d'une colonne est la surface détectrice de projection (218, 258, 298), pendant qu'une autre surface de la colonne constitue la surface détectrice réceptrice (224, 264, 304) ;
ladite surface de projection de lumière (220, 260, 300) et ladite surface réceptrice de lumière (214, 254, 294) se trouvent à cet extrémité, qui se trouve en face des surfaces réfléchissantes.

10. Dispositif à détecter une condition d'un réservoir de billets de banque selon une quelconque des revendications précédentes, dans lequel toutes les surfaces de projection de lumière et toutes les surfaces réceptrices de lumière se trouvent sur une surface (134).

11. Dispositif à détecter une condition d'un réservoir de billets de banque selon une quelconque des revendications précédentes, dans lequel ledit élément émetteur de lumière (145, 169, 199, 239, 279) des ladite partie de projection (144, 168, 198, 238, 278) est fixé à l'extrémité supérieure d'un cylindre (150, 172, 202, 242, 282), qui s'étend en sens perpendiculaire ;
et dans lequel ledit élément récepteur de lumière (147, 171, 201, 241, 281) de ladite partie réceptrice (146, 170, 200, 240, 280) est fixé à l'extrémité supérieure d'un cylindre (152, 174, 204, 244, 284), qui s'étend en sens perpendiculaire.

12. Dispositif à détecter une condition d'un réservoir de billets de banque selon la revendication 11, dans lequel
ladite partie de projection (144, 168, 198, 238, 278) se trouve à une position supérieure, à partir de la surface inférieure dudit cylindre (150, 172, 202, 242, 282) au-dessus du diamètre dudit cylindre ;
ladite partie réceptrice (146, 170, 200, 240, 280) se trouve à une position supérieure, à partir de la surface inférieure dudit cylindre (150, 172, 202, 242, 282) au-dessus du diamètre dudit cylindre.
